# EUROPEAN PATENT APPLICATION

(11) **EP 4 826 160 A2**
(43) Date of publication of application: **21.10.2026**
(21) Application number: 25827081.8
(22) Date of filing: 26.06.2025
(51) Int. Cl.: E01C 23/01, B05C 11/10, B05B 17/06, H01M 50/403, H01M 50/446

(54) **COATING DEVICE, METHOD FOR MANUFACTURING SEPARATOR USING SAME, AND SEPARATOR FOR LITHIUM SECONDARY BATTERY MANUFACTURED THEREBY**

(30) Priority: 26.06.2024 KR 20240083953
(71) Applicant: LG Energy Solution, Ltd., Seoul 07335 (KR)
(72) Inventor: LEE, Seung-Hyun, Daejeon 34122 (KR); KIM, Yu-Bae, Daejeon 34122 (KR); LEE, Byeong-Kyu, Daejeon 34122 (KR); KA, Kyung-Ryun, Daejeon 34122 (KR)
(74) Representative: Hoffmann Eitle
(86) International application number: PCT/KR2025/009007
(87) International publication number: WO 2026/005511

(57) **Abstract**

The present invention provides a coating device comprising: a coater head; an accommodation chamber which is positioned inside the coater head and accommodates a coating solution; an ultrasonic wave generation unit which is positioned inside the coater head and applies ultrasonic waves to the coating solution accommodated in the accommodation chamber; and a coating bar which transfers the coating solution from the accommodation chamber onto at least one surface of a substrate transferred in one direction.

## Description

### TECHNICAL FIELD

The present invention relates to a coating device, a method for manufacturing a separator using the same, and a separator for a lithium secondary battery manufactured thereby.

### BACKGROUND ART

In general, a separator is interposed between a cathode and an anode of a lithium secondary battery that can be repeatedly charged and discharged, to prevent a short-circuit between the cathode and the anode. The separator may be manufactured by using only a porous polymer substrate, or by coating and drying a slurry-state coating solution containing inorganic particles and a binder polymer, on at least one surface of the porous polymer substrate, and forming an inorganic coating layer. In the inorganic coating layer of the separator, the surface of the separator is coated with inorganic particles so as to improve the mechanical and thermal stability of the separator, and to improve the performance while maintaining ion conductivity. The inorganic coating layer mainly serves to increase mechanical strength and secure ion conductivity while maintaining a porous structure.

### DISCLOSURE

### Technical Problem

According to one aspect of the present invention, the present invention provides a coating device capable of manufacturing a separator by adjusting properties of a coating solution using ultrasonic waves, and a separator manufacturing method using the same.

According to another aspect of the present invention, a coating device and a separator manufacturing method using the same are provided, in which a coating solution, which has not been transferred or has undergone changes in properties over time, is irradiated with ultrasonic waves, so that the viscosity of the coating solution and the particle size of inorganic particles can be maintained or reduced.

According to another aspect of the present invention, the present invention provides a coating device and a separator manufacturing method using the same, in which a coating solution not transferred onto a substrate is recycled, and at the same time, the quality of the coating solution can be kept constant.

According to another aspect of the present invention, in the present invention, the agglomeration of inorganic particles and a binder is broken up, thereby lowering the SPAN value of the inorganic particles, and accordingly a separator with excellent surface roughness characteristics may be provided.

Technical problems to be solved by the present invention are not limited to the above-described problems, and other unmentioned problems may be clearly understood by those of ordinary skill in the art from the description of the invention described below.

### Technical Solution

According to one aspect of the present invention, provided are a coating device of the following embodiments, a method for manufacturing a separator using the same, and a separator for a lithium secondary battery manufactured thereby.

According to a first embodiment, provided is a coating device including: a coater head; an accommodation chamber that is located inside the coater head and accommodates a coating solution; an ultrasonic generator that is located inside the coater head and applies ultrasonic waves to the coating solution accommodated in the accommodation chamber; and a coating bar that transfers the coating solution from the accommodation chamber onto at least one surface of a substrate being transported in one direction.

According to a second embodiment, as compared to the first embodiment, the ultrasonic generator may be located inside the accommodation chamber.

According to a third embodiment, as compared to any one embodiment of the first to second embodiments, the ultrasonic generator may be located on an inner wall of the accommodation chamber.

According to a fourth embodiment, as compared to any one embodiment of the first to third embodiments, a coating solution tank may be further included, which is located outside the coater head, and supplies the coating solution to the accommodation chamber through a transfer pipe.

According to a fifth embodiment, as compared to any one embodiment of the first to fourth embodiments, a recovery unit may be further included, which is located on an outer surface of the coater head, and accommodates the coating solution that remains after coating at least one surface of the substrate and is transferred along the outer surface of the coater head.

According to a sixth embodiment, as compared to the fifth embodiment, a first recovery pipe may be further included, which is located inside the coater head, and connects the recovery unit to the accommodation chamber.

According to a seventh embodiment, as compared to any one embodiment of the first to eighth embodiments, a coating solution tank that is located outside the coater head, and supplies the coating solution to the accommodation chamber through a transfer pipe; a recovery unit that is located on an outer surface of the coater head, and accommodates the coating solution that remains after coating at least one surface of the substrate and is transferred along the outer surface of the coater head; and a second recovery pipe that connects the recovery unit to the coating solution tank may be further included.

According to an eighth embodiment, as compared to any one embodiment of the first to seventh embodiments, the ultrasonic generator may include a sensor unit therein so as to control whether to generate ultrasonic waves in response to an external signal.

According to a ninth embodiment, provided is a method of manufacturing a separator by using a coating device including a coater head. The separator manufacturing method includes: step S10 of supplying a coating solution containing a binder polymer, inorganic particles and a solvent to an accommodation chamber included in the coater head; step S20 of applying ultrasonic waves to the coating solution accommodated in the accommodation chamber by using an ultrasonic generator located inside the coater head; and step S30 of transferring the coating solution to which the ultrasonic waves have been applied, onto at least one surface of a substrate being transported in one direction, by using a coating bar provided in the coater head.

According to a tenth embodiment, as compared to the ninth embodiment, the ultrasonic waves may have a frequency of 20 kHz to 100 kHz.

According to an eleventh embodiment, as compared to any one embodiment of the ninth to tenth embodiments: step S40 of recovering the coating solution remaining after the coating solution is transferred onto at least one surface of the substrate, by using a recovery unit provided on an outer surface of the coater head, may be further included after step S30.

According to a twelfth embodiment, as compared to the eleventh embodiment, step S50 of applying ultrasonic waves to the coating solution recovered into the accommodation chamber via the recovery unit may be further included after step S40.

According to a thirteenth embodiment, as compared to any one embodiment of the ninth to twelfth embodiments, the coating solution in step S10 may have a viscosity present within a range of about 10 cps to about 50 cps at 25 °C.

According to a fourteenth embodiment, provided is a method of manufacturing a separator by using a coating device including a coater head. The separator manufacturing method includes: step P1 of supplying a coating solution containing a binder polymer, inorganic particles and a solvent to an accommodation chamber included in the coater head; step P2 of transferring the coating solution onto at least one surface of a substrate being transported in one direction, by using a coating bar provided in a part of the coater head; step P3 of recovering the coating solution remaining after the coating solution is transferred onto at least one surface of the substrate, by using a recovery unit provided on an outer surface of the coater head; and step P4 of applying ultrasonic waves to the coating solution recovered into the accommodation chamber via the recovery unit.

According to a fifteenth embodiment, provided is a separator for a lithium secondary battery, which includes: a porous polymer substrate; and an inorganic coating layer that is formed on at least one surface of the porous polymer substrate, and contains inorganic particles and a binder polymer. A surface roughness (Ra) of the inorganic coating layer is 0.12 µm or less, a SPAN value of the inorganic particles is 1.35 or less, and the SPAN value is calculated by Equation 1:

SPAN value = (particle diameter (D₉₀) of inorganic particles - particle diameter (D₁₀) of inorganic particles)/ particle diameter (D₅₀) of inorganic particles ... Equation (1)

According to a sixteenth embodiment, as compared to the fifteenth embodiment, the inorganic coating layer may be formed by a coating solution in which the inorganic particles and the binder polymer are disintegrated from each other by ultrasonic waves, and the coating solution may be prepared according to any one embodiment of the ninth to fourteenth embodiments.

According to a seventeenth embodiment, as compared to any one embodiment of the fifteenth to sixteenth embodiments, a particle diameter (D₅₀) of the inorganic particles may be 1.0 µm to 1.3 µm.

### Advantageous Effects

The coating device according to one embodiment of the present invention includes an ultrasonic generator, so as to adjust the particle size and viscosity of the coating solution, and to adjust the particle diameter of inorganic particles.

In the coating device according to one embodiment of the present invention, the coating solution not transferred onto the substrate may be recycled, and then by using the ultrasonic generator, the particle size of particles included in the recycled coating solution can be kept constant, and the viscosity of the coating solution can be maintained or reduced.

In the coating device according to one embodiment of the present invention, the coating solution not transferred onto the substrate may be recycled, and ultrasonic waves may be applied to the coating solution accommodated in the accommodation chamber until just before the transfer of the coating solution to the substrate. Thus, the particle size of particles included in the coating solution may be kept constant and the viscosity of the coating solution may be maintained or reduced.

In the separator manufacturing method according to one embodiment of the present invention, in order to manufacture the separator, ultrasonic waves may be applied to the coating solution, thereby adjusting the particle diameter of inorganic particles included in the coating solution, and adjusting the viscosity of the coating solution.

In the separator manufacturing method according to one embodiment of the present invention, the coating solution not transferred onto the substrate may be recycled, and ultrasonic waves may be applied to the recycled coating solution so that the particle size of particles included in the recycled coating solution may be kept constant, and the viscosity of the coating solution may be maintained or lowered.

In the separator manufacturing method according to one embodiment of the present invention, the coating solution not transferred onto the substrate may be recycled, and ultrasonic waves may be applied to the coating solution accommodated in the accommodation chamber until just before the transfer of the coating solution to the substrate. Thus, the particle size of particles included in the coating solution may be kept constant and the viscosity of the coating solution may be maintained or reduced.

The separator according to one embodiment of the present invention may be excellent in the particle size distribution of inorganic particles and the surface roughness characteristics.

However, effects that can be obtained through the present invention are not limited to the above-described effects, and other technical effects that are not mentioned may be clearly understood by those skilled in the art from the description of the invention described below.

### DESCRIPTION OF DRAWINGS

The following drawings attached to the present specification illustrate embodiments of the present invention, and serve to further facilitate understanding of the technical idea of the present invention together with the above-described contents of the invention. Thus, the present invention should not be interpreted as being limited to the matters described in such drawings.
FIG. 1 schematically illustrates the structure of a coating device according to one embodiment of the present invention.
FIG. 2 schematically illustrates the structure of the coating device according to one embodiment of the present invention.
FIG. 3 schematically illustrates the structure of the coating device according to one embodiment of the present invention, and specifically, schematically illustrates the coating device further including a coating solution tank.
FIG. 4 schematically illustrates the structure of the coating device according to one embodiment of the present invention, and specifically, schematically illustrates the coating device further including a recovery unit.
FIG. 5 schematically illustrates the structure of the coating device according to one embodiment of the present invention, and specifically schematically illustrates the coating device further including the recovery unit and the coating solution tank.
FIG. 6 schematically illustrates a flowchart of a method of manufacturing the separator according to one embodiment of the present invention.
FIG. 7 schematically illustrates a flowchart of a method of manufacturing the separator according to another embodiment of the present invention.
FIGS. 8a to 8c are photographs of the surfaces of separators according to Example and Comparative Examples, which were observed by a confocal scanning microscope.

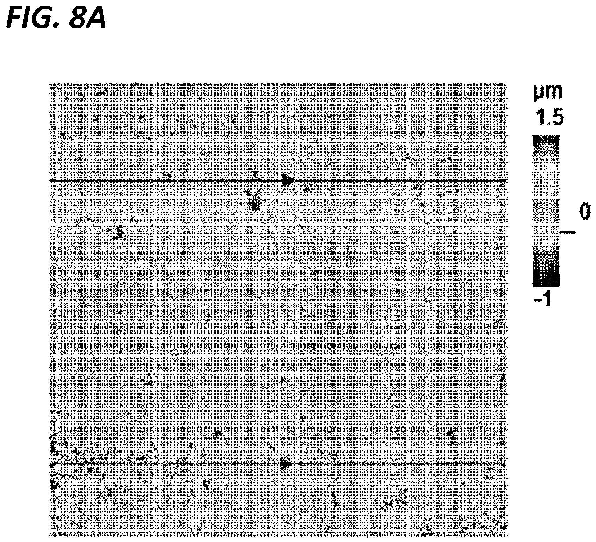

FIG. 8a is a photograph of the surface of the separator in Comparative Example 1, which was observed by a confocal scanning microscope.

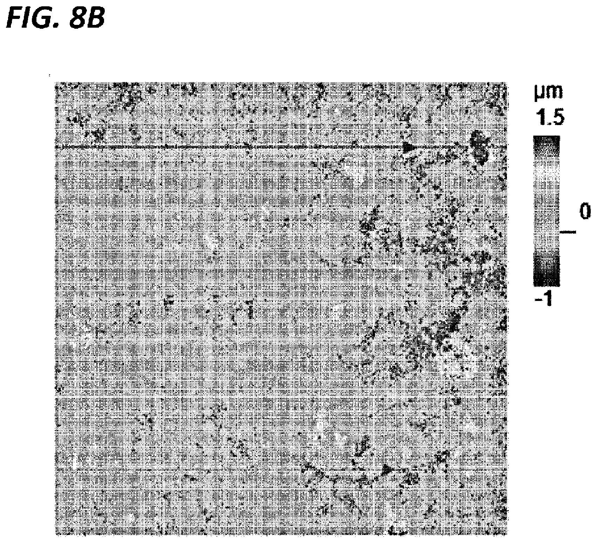

FIG. 8b is a photograph of the surface of the separator in Comparative Example 2, which was observed by a confocal scanning microscope.

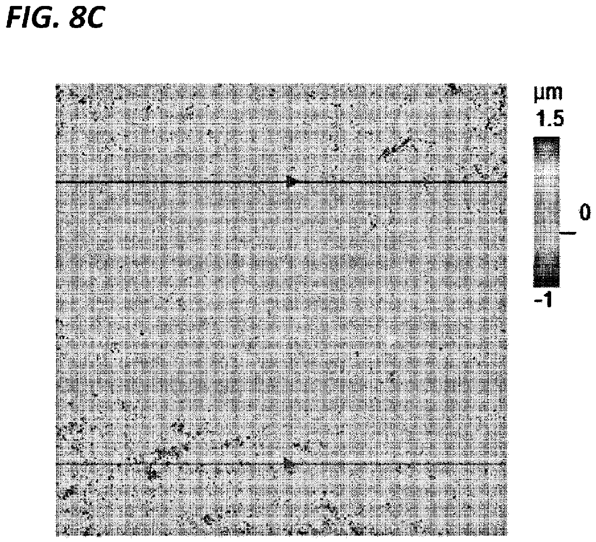

FIG. 8c is a photograph of the surface of the separator in Example 1, which was observed by a confocal scanning microscope.

In some of the attached drawings, corresponding components are given the same reference numerals. Those skilled in the art will understand that the present drawings illustrate elements in a simplified and clear manner and are not necessarily drawn to scale. For example, in order to facilitate understanding of various embodiments, dimensions of some elements depicted in the drawings may be exaggerated compared to those of other elements, in the illustration. Also, elements of known technologies which are useful or essential in commercially feasible embodiments may often not be described so as not to obscure the intent of various embodiments of the present invention.

### BEST MODE

Terms or words used in the present specification and claims should not be limitedly construed as usual or dictionary meanings, and should be interpreted as meanings and concepts consistent with the technical idea of the present invention on the basis of the principle that the inventor can appropriately define the concept of the term in order to explain his/her own invention in the best way.

The terms used in the present specification are used merely to describe exemplary embodiments, and are not intended to limit the present invention. The singular expression includes the plural expression unless the context clearly indicates otherwise.

### <Definition>

Throughout this specification, when it is said that a certain part "includes" a certain component, this means that the certain part may further include other components rather than excluding other components unless specifically stated to the contrary.

Throughout this specification, the particle diameter (or particle size) may be measured by using a laser diffraction method. Specifically, measurement target powder is dispersed in a dispersion medium, and then is introduced into a commercially available laser diffraction particle size measurement device (e.g., Microtrac S3500). Then, when the particles pass through laser beam, the particle size distribution is calculated by measuring the difference in the diffraction pattern according to the particle size. D₁₀, D₅₀ and D₉₀ may be measured, respectively, by calculating the particle diameters at points of 10%, 50% and 90% in the particle diameter-based cumulative distribution of the number of particles, in the measuring device.

Throughout this specification, the 'primary particle' refers to a particle having no grain boundary in appearance when observed using a scanning electron microscope (SEM) in a field of view of 5,000 to 20,000 times.

Throughout this specification, the 'secondary particle' refers to a particle formed by agglomeration of the primary particles.

Throughout this specification, a 'single particle' is a particle that exists independently of the secondary particle and has no grain boundary in appearance.

The case of the 'particle' mentioned throughout this specification may have a meaning that includes any one or all of a single particle, a secondary particle, and a primary particle.

In the manufacturing of a separator for an electrochemical device such as a lithium secondary battery, a slurry-state coating solution may be applied to a porous polymer substrate by using a device such as a separator coater, and then may be dried to form an inorganic coating layer. Meanwhile, various methods are used as a method of applying the slurry-state coating solution to the substrate, such as dip coating in which both sides are simultaneously coated, gravure coating in which one side is coated and then the opposite side is coated, and die coating in which a liquid spreads over a wide area mainly through a slit die structure.

Dip coating and Gravure coating have relatively simple coating processes, but since a large amount of coating solution is exposed to the air during the coating processes, the solvent evaporates, thereby increasing the viscosity of the coating solution or causing agglomeration of solutes in the coating solution. Then, there is a problem in that the quality of the coating solution is lowered. Also, the die coating does not cause the above problems because the degree of exposure of the coating solution to air is small, but there is a problem in that it is difficult to maintain uniformity of the coating thickness and the coating solution which is not transferred onto the substrate may not be recycled.

The present invention provides a coating device and a method of manufacturing a separator, in which a coating solution that is not transferred onto a substrate may be recycled, and by using an ultrasonic generator, the particle size of particles included in the recycled coating solution may be kept constant, and the viscosity of the coating solution may be maintained or reduced.

Hereinafter, the present invention will be described in more detail with the accompanying drawings.

### <Coating Device>

The present invention provides a coating device.

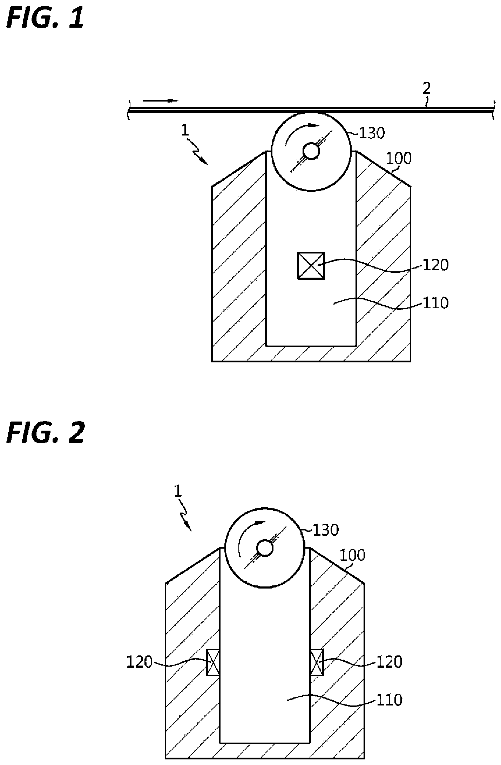

FIG. 1 schematically illustrates the structure of a coating device according to one embodiment of the present invention.

According to one aspect of the present invention, a coating device 1 of the present invention includes: a coater head 100; an accommodation chamber 110 that is located inside the coater head 100 and accommodates a coating solution; an ultrasonic generator 120 that is located inside the coater head 100 and applies ultrasonic waves to the coating solution accommodated in the accommodation chamber 110; and a coating bar 130 that transfers the coating solution from the accommodation chamber 110 onto at least one surface of a substrate 2 being transported in one direction.

The substrate 2 is illustrated in FIG. 1 for reference, but should not be construed as limiting the coating device 1 of the present invention. According to one embodiment, the substrate 2 may be a porous polymer substrate for manufacturing a separator for a secondary battery. Also, the coating solution may be a slurry-state coating solution including a binder polymer, inorganic particles, and a solvent. Such a coating solution may be coated on at least one surface of the substrate 2 so as to manufacture a separator including an inorganic coating layer on the porous polymer substrate. The coating device 1 of the present invention is suitable for use in the separator coating in this manner.

In one embodiment of the present invention, the coating device 1 may receive the coating solution supplied from the outside and accommodate the coating solution in the accommodation chamber 110. Then, the coating solution contained in the accommodation chamber 110 may come into contact with the coating bar 130 and the coating solution applied to the coating bar 130 may be transferred onto at least one surface of the substrate 2 being transported in one direction. Meanwhile, in order for the coating solution to come into contact with the coating bar 130 from the accommodation chamber 110, an auxiliary device (not illustrated), and the like, may be additionally provided within the accommodation chamber 110 to push up the coating solution such that the accommodation location of the coating solution may be positioned close to the coating bar 130.

In one embodiment of the present invention, the ultrasonic generator 120 is a device capable of generating ultrasonic waves in the accommodation chamber 110, and there is no particular limitation on the type and shape. In the ultrasonic generator 120 of the present invention, an electrical signal is converted into a mechanical signal by a piezoelectric element, and the mechanical signal is amplified by a metal material such as a vibrator so as to generate vibrations having an ultrasonic frequency in the solvent (medium). The generated ultrasonic waves generate, for example, microbubbles in the solvent (medium). When the microbubbles disappear, a very large pressure and a high temperature are generated. The energy generated at this time may be transferred to the solutes.

In one embodiment of the present invention, the ultrasonic generator 120 generates ultrasonic waves having a frequency of about 20 kHz to 100 kHz, a frequency of about 20 kHz to 60 kHz, or a frequency of about 20 kHz to 40 kHz to generate vibrations in the solvent of the coating solution. As microbubbles are generated and disappear due to the vibrations, energy is generated, and the agglomeration between the inorganic particles and the binder polymer in the coating solution may be de-aggregated by the energy. The ultrasonic generator 120 may also help to uniformly disperse the solid in the coating solution, within the solvent. For example, it is assumed that the ultrasonic generator 120 is capable of generating ultrasonic waves to the extent that an inorganic particle disintegrating effect of separating agglomerated inorganic particles from each other can be exhibited.

In one embodiment of the present invention, there is no limitation on the location of the ultrasonic generator 120 as long as vibrations having an ultrasonic frequency can be generated in the solvent.

In one embodiment of the present invention, the ultrasonic generator 120 may be located inside the accommodation chamber 110. When the ultrasonic generator 120 is located inside the accommodation chamber 110, the area of the ultrasonic generator 120 facing the coating solution is larger, and thus more microbubbles may be generated in the coating solution per hour. For example, the ultrasonic generator 120 may directly apply ultrasonic waves to the coating solution accommodated in the accommodation chamber 110 by being located inside the accommodation chamber 110. Ultrasonic waves can be applied to the coating solution until just before the transfer to the coating bar 130. Thus, positioning the ultrasonic generator 120 inside the coater head 100, for example, inside the accommodation chamber 110, has an advantage of a clear ultrasonic application effect.

In one embodiment of the present invention, as long as the ultrasonic generator 120 can be positioned inside the accommodation chamber 110, there is no limitation on its shape and means. For example, in the form of the ultrasonic generator 120, the ultrasonic generator 120 may be attached to the inner wall of the accommodation chamber 110 and may extend to the central portion of the accommodation chamber 110.

FIG. 2 schematically illustrates the structure of the coating device 1 according to one embodiment of the present invention. In one embodiment illustrated in FIG. 2, the ultrasonic generator 120 may be located on the inner wall of the accommodation chamber 110. As illustrated in FIG. 2, the ultrasonic generator 120 may have a form in which the ultrasonic generator 120 is located on the inner wall of the accommodation chamber 110 so that a vibrator directly generating vibrations is exposed and thus comes into contact with the coating solution. In this way, when the ultrasonic generator 120 is located on the inner wall of the accommodation chamber 110, the contact area between the ultrasonic generator 120 and the coating solution is small. Then, the corrosion of the ultrasonic generator 120, which is caused by microbubbles generated and extinguished by vibrations, may be reduced. Meanwhile, in the present embodiment, the ultrasonic generator 120 is located on the inner wall of the accommodation chamber 110, but in another embodiment, the ultrasonic generator 120 may be located on the outer wall of the accommodation chamber 110.

In one embodiment of the present invention, the ultrasonic generator 120 may include a sensor unit (not illustrated) therein so as to control whether to generate ultrasonic waves in response to an external signal. Whether to generate ultrasonic waves may be controlled by the sensor unit. For example, depending on the types of the inorganic particles and the binder polymer, whether to generate ultrasonic waves may be controlled through the sensor unit in a case where ultrasonic irradiation is not required when the coating solution is initially supplied, but ultrasonic irradiation is required for the recycled coating solution.

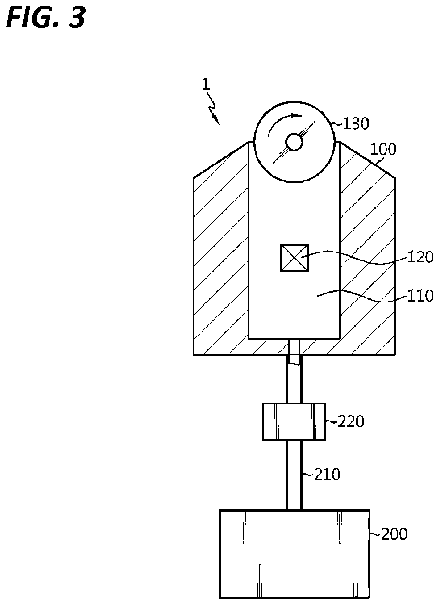

FIG. 3 schematically illustrates the structure of the coating device according to one embodiment of the present invention, and schematically illustrates the coating device 1 further including a coating solution tank 200.

As illustrated in FIG. 3, in one embodiment of the present invention, the coating device 1 may further include the coating solution tank 200. The coating solution tank 200 may be located outside the coater head 100, and may be configured to supply the coating solution to the accommodation chamber 110 through a transfer pipe 210.

In one embodiment of the present invention, an impeller (not illustrated) for stirring the coating solution may be provided inside the coating solution tank 200. In this case, the coating solution located inside the coating solution tank 200 may be stirred by the impeller. As a result, the inorganic particles and the binder polymer in the coating solution may be present within the coating solution without agglomerating with each other.

In one embodiment of the present invention illustrated in FIG. 3, the coating device 1 may further include a first pressure pump 220. The first pressure pump 220 may be provided in the transfer pipe 210 to provide pressure so that the coating solution is transferred to the coater head 100. By controlling the opening/closing of the first pressure pump 220, it is possible to control whether to supply the coating solution from the coating solution tank 200 to the coater head 100. By controlling the pressure in the first pressure pump 220, it is possible to control the speed of the coating solution supplied from the coating solution tank 200 to the coater head 100. Also, the first pressure pump 220 may apply pressure to the coating solution such that the coating solution can easily come into contact with the coating bar 130.

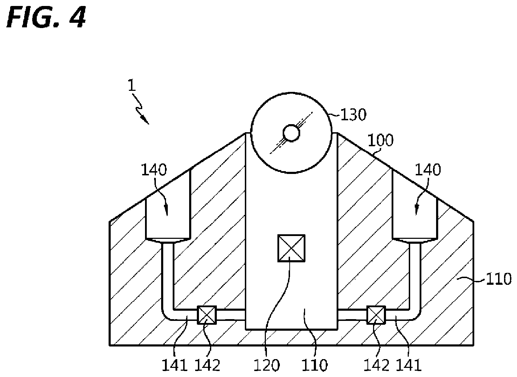

FIG. 4 schematically illustrates the structure of the coating device 1 according to one embodiment of the present invention, and schematically illustrates the coating device 1 further including a recovery unit 140.

In one embodiment of the present invention, the coating device 1 may further include the recovery unit 140. The recovery unit 140 may be located on the outer surface of the coater head 100, and may have a configuration in which the coating solution, which remains after coating at least one surface of the substrate (not illustrated, see 2 in FIG. 1) and is transferred along the outer surface of the coater head 100, is accommodated. To this end, the coater head 100 may have an inclined slope formed on the outer surface thereof.

In one embodiment of the present invention, the coating solution is transferred onto the substrate from the accommodation chamber 110 through the coating bar 130. When the coating solution is excessively applied to the coating bar 130, the coating solution is not entirely transferred to the substrate, but flows on the outer surface of the coater head 100. In this case, when a slope is formed on the outer surface of the coater head 100, the coating solution may flow down the surface of the coater head 100 and may be collected in the recovery unit 140.

Meanwhile, in one embodiment of the present invention, when the coating solution is excessively applied to the coating bar 130, the coating solution may fall back to the coater head 100 due to gravity, and the like, even after being transferred to, for example, the substrate traveling to the right in FIG. 4. Even in this case, the coating solution may flow down the inclined outer surface of the coater head 100 and may be collected in the recovery unit 140. In preparation for such a case, the inner space of the recovery unit 140 located at the rear side of the coater head 100, for example, the right side in FIG. 4, may be larger than the inner space of the recovery unit 140 located at the front side of the coater head 100, for example, the left side in FIG. 4.

In this specification, the front side of the coater head 100 refers to the outer surface of the coater head 100 that is closer to the side where the substrate being transported in one direction (for example, in the right direction) has not yet come into contact with the coating bar 130. The rear side of the coater head 100 refers to the outer surface of the coater head 100 that is closer to the side where the substrate being transported in one direction has already come into contact with the coating bar 130.

In one embodiment of the present invention, the coating device 1 may further include a first recovery pipe 141. The first recovery pipe 141 may be located inside the coater head 100, and may be configured to connect the recovery unit 140 to the accommodation chamber 110. The coating solution collected in the recovery unit 140 may be transferred to the accommodation chamber 110 via the first recovery pipe 141 and then the coating solution may be recycled. In this case, in the recycled coating solution, the ultrasonic generator 120 may generate microbubbles in the coating solution, so that the solutes in the coating solution may be de-aggregated or the viscosity of the coating solution may be reduced. Also, when the coating solution is transferred to the substrate, the solvent of the coating solution may evaporate in the air atmosphere, and accordingly, the solutes, that is, the inorganic particles and the binder polymer may agglomerate with each other. For example, primary particles of the inorganic particles and the binder polymer may agglomerate to form secondary particles. Here, the agglomerated inorganic particles and binder polymers may be de-aggregated by ultrasonic waves in the accommodation chamber 110, through the recovery unit 140 and the first recovery pipe 141.

In one embodiment of the present invention, an inclined portion may be formed within the inner space of the recovery unit 140 and may be connected to the recovery portion on the lower side. The inclined portion may have an internal angle or a curved shape without angles. Due to the inclined portion, the transfer of the coating solution to the recovery pipe may be further facilitated, and the coating solution may not accumulate inside.

Since the coater head 100 is not a sealed type but an open type, when the solvent evaporates due to exposure to air during the coating process, the inorganic particles and the binder polymer in the coating solution may be re-aggregated. When the coating solution containing the re-aggregated inorganic particles or binder polymers as they are is recycled, there is a concern on the quality deterioration. For example, the re-aggregated inorganic particles have a larger particle size and adversely affect the quality of the separator. In the present invention, the coating solution collected in the recovery unit 140 is transferred to the accommodation chamber 110. Then, the re-aggregated inorganic particles and binder polymers may be de-aggregated by using the ultrasonic generator 120, and then may be used after being brought to a state similar to that of a coating solution before recycling. Even when the inorganic particles are re-aggregated due to exposure to the air, the inorganic particles may be applied onto the substrate after being de-aggregated by the ultrasonic generator 120. Thus, the separator may be manufactured by using inorganic particles with a small particle size, that is, fine particles close to the original state.

In one embodiment of the present invention, the coating device 1 may further include a second pressure pump 142 that provides pressure so that the coating solution accommodated within the recovery unit 140 is transferred to the accommodation chamber 110.

In one embodiment of the present invention, there is no limitation on the installation location, shape and type of the second pressure pump 142 as long as the second pressure pump 142 can provide pressure so that the coating solution accommodated in the recovery unit 140 is transferred to the accommodation chamber 110.

In one embodiment of the present invention, as illustrated in FIG. 4, the second pressure pump 142 may be provided in the first recovery pipe 141. In this case, in the second pressure pump 142, by controlling the opening/closing of the pump, it is possible to control whether to recover the coating solution from the recovery unit 140 to the accommodation chamber 110. By controlling the pressure in the second pressure pump 142, it is possible to control the speed of the coating solution supplied from the recovery unit 140 to the accommodation chamber 110. Also, the second pressure pump 142 may apply pressure to the coating solution such that the coating solution can easily come into contact with the coating bar 130.

In the coating device 1 of FIG. 4, the first recovery pipe 141 is located inside the coater head 100, and can connect the recovery unit 140 to the accommodation chamber 110 over a short distance. Thus, there is an advantage in that the coating solution recovered for reuse can be quickly transferred to the accommodation chamber 110.

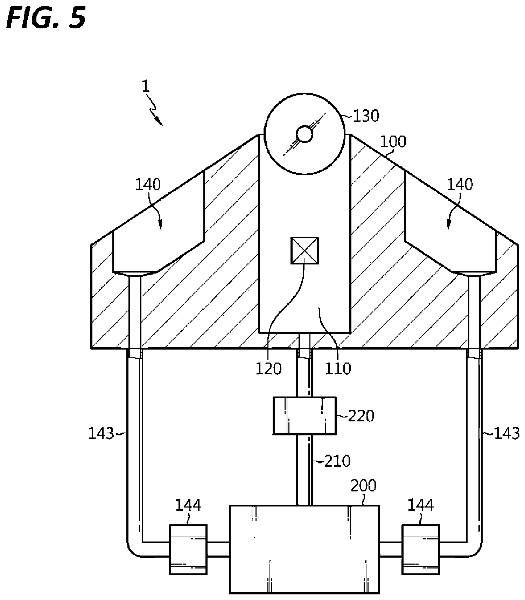

FIG. 5 schematically illustrates the structure of the coating device 1 according to one embodiment of the present invention, and schematically illustrates the coating device further including the recovery unit 140 and the coating solution tank 200.

In one embodiment of the present invention, the coating device 1 further includes the coating solution tank 200. The coating solution tank 200 may be located outside the coater head 100, and may be configured to supply the coating solution to the accommodation chamber 110 through the transfer pipe 210. Also, the coating device 1 may further include the recovery unit 140 and a second recovery pipe 143. The recovery unit 140 is located on the outer surface of the coater head 100, and accommodates the coating solution that remains after coating at least one surface of the substrate and is transferred along the outer surface of the coater head 100. The second recovery pipe 143 connects the recovery unit 140 to the coating solution tank 200. In this case, the coating solution collected in the recovery unit 140 may be transferred to the coating solution tank 200 via the second recovery pipe 143 and then the coating solution may be recycled. Here, the recycled coating solution may be stirred by the impeller, and the like, in the coating solution tank 200, and then the solutes in the coating solution may be pulverized or the viscosity of the coating solution may be lowered. Also, the recycled coating solution may be mixed with another coating solution within the coating solution tank 200 and then may be transferred to the accommodation chamber 110 via the transfer pipe 210. Then, the solutes in the coating solution may be de-aggregated again by the ultrasonic generator 120 of the accommodation chamber 110 or the viscosity of the coating solution may be lowered.

The coating device 1 of FIG. 5 is different from the coating device 1 of FIG. 4 in that the coating solution recovered for reuse can be circulated through the coating solution tank 200. The coating solution collected in the recovery unit 140 can be transferred to the accommodation chamber 110 after being stirred by the impeller, and the like, in the coating solution tank 200. Thus, even when the agglomeration becomes severe during transfer of the coating solution or the degree of dispersion in the coating solution is changed, the coating solution is stirred with another coating solution in the coating solution tank 200 and is homogenized, and then is transferred to the accommodation chamber 110. Thus, there is an advantage in maintaining a constant quality of the coating solution.

In one embodiment of the present invention, a third pressure pump 144 may be further included, which provides pressure so that the coating solution accommodated within the recovery unit 140 is transferred to the coating solution tank 200.

In one embodiment of the present invention, there is no limitation on the installation location, shape and type of the third pressure pump 144 as long as the third pressure pump 144 can provide pressure so that the coating solution accommodated within the recovery unit 140 is transferred to the coating solution tank 200.

In one embodiment of the present invention, as illustrated in FIG. 5, the third pressure pump 144 may be provided in the second recovery pipe 143. In this case, in the third pressure pump 144, by controlling the opening/closing of the pump, it is possible to control whether to recover the coating solution from the recovery unit 140 to the coating solution tank 200. By controlling the pressure in the third pressure pump 144, it is possible to control the speed of the coating solution supplied from the recovery unit 140 to the coating solution tank 200.

In one embodiment of the present invention, there is no limitation on the type and shape of the coating bar 130 as long as the coating solution can be transferred from the accommodation chamber onto at least one surface of the substrate being transported in one direction. For example, as for the coating bar 130, a wire bar in which wires are wound around a cylindrical bar or a cylindrical bar around which wires are not wound may be used. According to one embodiment, the coating bar 130 may be a Mayer bar.

### <Manufacturing method of separator>

The present invention provides a method of manufacturing the separator.

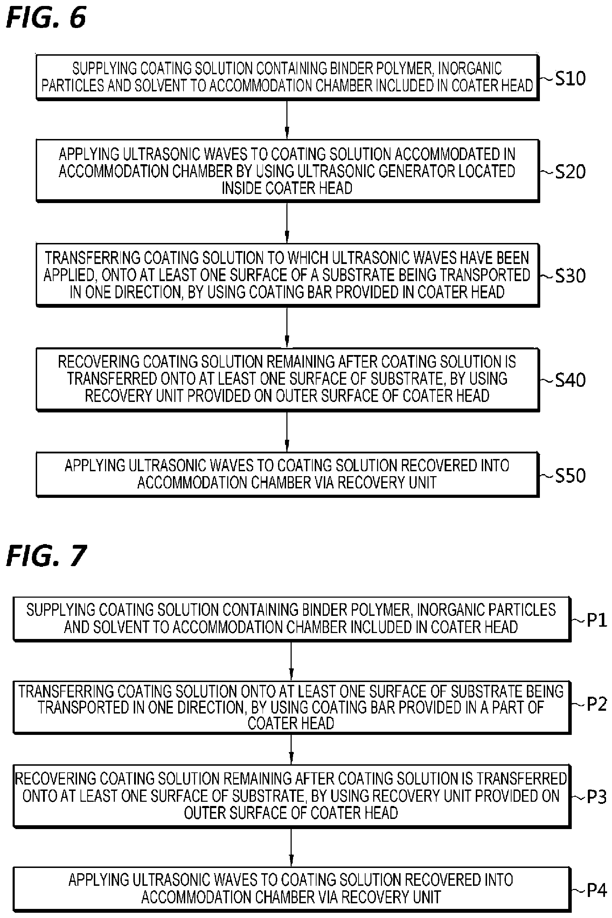

FIG. 6 schematically illustrates a flowchart of a method of manufacturing the separator according to one embodiment of the present invention.

Referring to FIG. 6, the separator manufacturing method according to one embodiment of the present invention includes: step S10 of supplying a coating solution containing a binder polymer, inorganic particles and a solvent to an accommodation chamber included in a coater head; step S20 of applying ultrasonic waves to the coating solution accommodated in the accommodation chamber by using an ultrasonic generator located inside the coater head; and step S30 of transferring the coating solution to which the ultrasonic waves have been applied, onto at least one surface of a substrate being transported in one direction, by using a coating bar provided in the coater head.

Also, referring to FIG. 6, in one embodiment of the present invention, the separator manufacturing method may further include, after step S30, step S40 of recovering the coating solution remaining after the coating solution is transferred onto at least one surface of the substrate, by using a recovery unit provided on the outer surface of the coater head.

Also, referring to FIG. 6, in one embodiment of the present invention, the separator manufacturing method may further include, after step S40, step S50 of applying ultrasonic waves to the coating solution recovered into the accommodation chamber via the recovery unit.

Hereinafter, the separator manufacturing method will be described step by step.

First, in the separator manufacturing method of the present invention, the coating solution containing a binder polymer, inorganic particles and a solvent is supplied to the accommodation chamber 110 of the coating device 1 (step S10).

In one embodiment of the present invention, the coating solution may be prepared by adding the binder polymer and the inorganic particles to the solvent and mixing these. The solid content of the coating solution may be in the range of about 5 wt% to 40 wt% with respect to 100 wt% of the coating solution.

In one embodiment of the present invention, the method of supplying the coating solution to the accommodation chamber 110 is not limited, but, for example, the coating solution may be injected into the accommodation chamber 110 and then supplied, or after first being supplied to the coating solution tank 200, the prepared coating solution may be supplied to the accommodation chamber 110 via the separate transfer pipe 210.

In the separator manufactured by the separator manufacturing method according to one embodiment of the present invention, the binder polymer may improve the mechanical properties of the finally formed separator, such as flexibility and elasticity, and may faithfully perform the role of a binder that connects and stably fixes the inorganic particles to each other, thereby contributing to preventing deterioration of mechanical properties of the separator. According to one embodiment, the glass transition temperature (Tg) of the binder polymer may exist within a range of about -200 °C to 200 °C.

Also, the binder polymer does not necessarily need to have an ion conducting ability, but when a polymer having an ion conducting ability is used, the performance of a lithium secondary battery may be further improved. Therefore, as for the binder polymer, one having a high dielectric constant may be used, when possible. In actuality, since the dissociation degree of the salt in the electrolyte depends on the dielectric constant of the electrolyte solvent, as the dielectric constant of the binder polymer is increased, the dissociation degree of the salt in the electrolyte may be improved. Such a dielectric constant of a binder polymer may have a usable range of about 1.0 to 100 (measurement frequency = 1 kHz), and may be, for example, about 10 or more.

In one embodiment of the present invention, the binder polymer may exhibit a high degree of swelling in the electrolyte by being gelled through impregnation of a liquid electrolyte. The solubility index of the binder polymer, i.e., a Hildebrand solubility parameter, may range from about 15 MPa^{1/2} to 45 MPa^{1/2}, about 15 MPa^{1/2} to 25 MPa^{1/2}, or about 30 MPa^{1/2} to 45 MPa^{1/2}. In one embodiment of the present invention, when hydrophilic polymers having many polar groups are used rather than hydrophobic polymers such as polyolefins, the above-described solubility index range may be satisfied.

In one embodiment of the present invention, the inorganic particles are packed and brought into contact with each other while being bound together by the binder polymer. This forms an interstitial volume between the inorganic particles, and the interstitial volume between the inorganic particles may become an empty space to form pores. The binder polymer may attach the inorganic particles to each other such that their bonded state can be maintained. For example, the binder polymer may connect and fix the inorganic particles to each other. Also, the pores of the separator are pores formed by the empty space formed from the interstitial volume between the inorganic particles, and these may be spaces defined by the inorganic particles whose surfaces are substantially in contact with each other in a structure packed (closed packed or densely packed) with the inorganic particles.

In one embodiment of the present invention, any binder polymer commonly used in the relevant technical field may be used without limitation. The binder polymer may be, for example, polymethylmethacrylate, polybutyl acrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, or two or more of these.

The binder polymer may be a particle-type binder or a soluble binder. In the case of the particle-type binder, the binder polymer is not dissolved in the solvent. The case where the binder polymer is the soluble binder is a case where the binder polymer is dissolved in the solvent. The solvent may be an aqueous solvent or an organic solvent.

In one embodiment of the present invention, the inorganic particles are not particularly limited as long as they are electrochemically stable. For example, the inorganic particles that can be used in the present invention are not particularly limited as long as no oxidation and/or reduction reaction occurs in the operating voltage range *(e.g.,* 0 to 5 V based on Li/Li⁺) in the application to an electrochemical device. When inorganic particles having a high dielectric constant are used as the inorganic particles, these may contribute to increasing the degree of dissociation of an electrolyte salt, for example, a lithium salt, in a liquid electrolyte, thereby improving the ion conductivity of the electrolyte.

For the above-described reasons, the inorganic particles may include high-dielectric constant inorganic particles having a dielectric constant of 5 or more, preferably 10 or more. Non-limiting examples of the inorganic particles having a dielectric constant of 5 or more may include BaTiO₃, Pb(Zr, Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂ or mixtures thereof.

As for the inorganic particles, inorganic particles having a lithium ion transfer capability, for example, inorganic particles containing an lithium element but having a function of moving lithium ions without storing lithium, may be used. Non-limiting examples of the inorganic particles having a lithium ion transfer capability may include lithium phosphate (Li₃PO₄), lithium titanium phosphate (LiₓTi_{y}(PO₄)₃, 0 <x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glasses (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂-based glasses (LiₓSi_{y}S_{z}, 0<x<3, 0<y<2, 0<z<4) such as Li₃PO₄-Li₂S-SiS₂, P₂S₅-based glasses (LiₓP_{y}S_{z}, 0<x<3, 0<y<3, 0<z<7) such as LiI-Li₂S-P₂S₅, or mixtures thereof.

The average particle diameter (D₅₀) of the inorganic particles (single particles) is not particularly limited, but may range from about 0.1 µm to 1.5 µm, 1.0 µm to 1.3 µm, or 1.05 µm to 1.2 µm so as to form a coating layer having a uniform thickness and to obtain an appropriate porosity. When the average particle diameter of the inorganic particles falls within the above range, the dispersibility is not lowered, and the thickness of a formed inorganic coating layer is not increased.

In one embodiment of the present invention, the inorganic particles may be included in a range of about 10 wt% to 90 wt% with respect to 100 wt% on the basis of 100 wt% of the solid content of the coating solution.

In one embodiment of the present invention, the solvent may be an aqueous solvent or an organic solvent.

In one embodiment of the present invention, as for the aqueous solvent, water or a water-containing aqueous solvent may be used. Also, when there are limitations on the drying speed and temperature, methanol, ethanol, isopropyl alcohol, and the like, which have lower boiling points than water may be additionally used.

In one embodiment of the present invention, examples of the organic solvent may include: cyclic aliphatic hydrocarbons such as cyclopentane and cyclohexane; aromatic hydrocarbons such as toluene, xylene, and ethylbenzene; ketones such as acetone, ethyl methyl ketone, diisopropyl ketone, cyclohexanone, methylcyclohexanone, and ethylcyclohexanone; chlorinated aliphatic hydrocarbons such as methylene chloride, chloroform, and carbon tetrachloride; esters such as ethyl acetate, butyl acetate, γ-butyrolactone, and ε-caprolactone; nitriles such as acetonitrile and propionitrile; ethers such as tetrahydrofuran, and ethylene glycol diethyl ether; alcohols such as methanol, ethanol, isopropanol, ethylene glycol, and ethylene glycol monomethyl ether; and amides such as N-methylpyrrolidone, and N,N-dimethylformamide. The organic solvent may include acetone in consideration of an advantage in the drying process.

In one embodiment of the present invention, the organic solvent may be used alone, or a mixed solvent obtained by mixing two or more types of these may be used. Among these, solvents having a low boiling point and a high volatility may be removed in a short time at low temperatures. For example, acetone, toluene, cyclohexanone, cyclopentane, tetrahydrofuran, cyclohexane, xylene, or N-methylpyrrolidone, or a mixed solvent thereof may be used.

Next, ultrasonic waves are applied to the coating solution (step S20).

There is no limitation on the method of applying ultrasonic waves to the coating solution, but, for example, ultrasonic waves may be applied to the coating solution by the ultrasonic generator 120.

According to one embodiment, the ultrasonic waves may have a frequency of about 20 kHz to 100 kHz, or a frequency of about 20 kHz to 60 kHz or about 20 kHz to 40 kHz. The ultrasonic waves having the above frequency range generate vibrations in the solvent of the coating solution. As microbubbles are generated and disappear due to the vibrations, energy is generated, and physical bonds between the inorganic particles and the binder polymer in the coating solution are separated by the energy. Then, the agglomeration between the inorganic particles and the binder polymer may be de-aggregated. Meanwhile, as the ultrasonic frequency is closer to the lower limit of the above-described range, the intensity of de-aggregation between the inorganic particles and the binder polymers may become stronger, while as the ultrasonic frequency is closer to the upper limit of the above-described range, the degree of de-aggregation between the inorganic particles and the binder polymers may be easily controlled.

In one embodiment of the present invention, in step S10, in a state prior to application of the ultrasonic waves, the binder polymer has a first particle diameter, and the inorganic particles have a second particle diameter. The coating solution to which the ultrasonic waves have been applied includes the binder polymer having a 1a particle diameter and the inorganic particles having a 2a particle diameter, in which the 1a particle diameter may be about 70% or less of the first particle diameter or the 2a particle diameter may be about 70% or less of the second particle diameter.

In one embodiment of the present invention, the binder polymer may be a particle-type binder, and the particle-type binder polymer may have a meaning that includes any one or all of single particles, secondary particles, and primary particles of the binder polymer. Also, the first particle diameter may refer to any diameter of the binder polymer, and may refer to, for example, the D₁₀ diameter, the D₅₀ diameter or the D₉₀ diameter of the binder polymer.

In one embodiment of the present invention, the binder polymer having the first particle diameter in step S10 may have the 1a particle diameter as ultrasonic waves are applied to the coating solution, and the 1a particle diameter may be about 90% or less, 80% or less, 70% or less, 60% or less, or 50% or less of the first particle diameter. For example, in one embodiment of the present invention, before the ultrasonic waves are applied, the binder polymer may be in the form of secondary particles having the first particle diameter in which binder polymers are agglomerated. As the ultrasonic waves are applied, the secondary particles are de-aggregated into primary particles of the binder polymer, so that the binder polymer having the 1a particle diameter may be included.

In one embodiment of the present invention, the inorganic particles may have a meaning that includes any one or all of single particles, secondary particles, and primary particles of an inorganic material. The second particle diameter may refer to any diameter of the inorganic particles, and may refer to, for example, the D₁₀ diameter, the D₅₀ diameter or the D₉₀ diameter of the inorganic particles.

In one embodiment of the present invention, the inorganic particles having the second particle diameter in step S10 may have the 2a particle diameter as ultrasonic waves are applied to the coating solution, and the 2a particle diameter may be about 90% or less, 80% or less, 70% or less, 60% or less, or 50% or less of the second particle diameter. For example, in one embodiment of the present invention, before the ultrasonic waves are applied, the inorganic particles may be in the form of secondary particles having the second particle diameter in which binder polymers are agglomerated. As the ultrasonic waves are applied, the secondary particles are de-aggregated into primary particles of the inorganic particles, so that the inorganic particles having the 2a particle diameter may be included.

In one embodiment of the present invention, when the coating solution contains a soluble binder polymer, only the inorganic particles may have a reduced particle diameter due to the ultrasonic waves.

Next, the coating solution to which the ultrasonic waves have been applied is transferred onto at least one surface of the substrate being transported in one direction (step S30).

The substrate may be a porous polymer substrate for manufacturing the separator for the secondary battery. The porous substrate may electrically insulate a cathode and an anode, and prevent short-circuiting from occurring due to a contact of electrodes while providing a path through which lithium ions can move. For example, the porous substrate may be a polymer film or a nonwoven fabric including one or more polymer resins selected from polyolefins such as polyethylene, and polypropylene, polyethylene terephthalate, polybutylene terephthalate, polyacetal, polyamide, polycarbonate, polyimide, polyether ether ketone, polyethersulfone, polyphenylene oxide, polyphenylene sulfide and polyethylene naphthalate, but is not limited thereto. The porous substrate may be formed of a single-layer polymer film or a nonwoven fabric, but is not limited thereto and may be composed of a plurality of layers.

In one embodiment of the present invention, after step S30, step S40 may be further included in which the coating solution remaining after the coating solution is transferred onto at least one surface of the substrate is recovered. The coating solution contained in the accommodation chamber 110 may come into contact with the coating bar 130, and the coating solution applied to the coating bar 130 may be transferred onto at least one surface of the substrate being transported in one direction. Meanwhile, when the coating solution is excessively applied to the coating bar 130, the coating solution is not entirely transferred to the substrate, but may flow on the outer surface of the coater head 100, may flow down the inclined surface of the coater head 100 and may be collected in the recovery unit 140. Here, by sending the coating solution collected in the recovery unit 140 back to the coating solution tank 200 or to the accommodation chamber 110, it is possible to recover the coating solution remaining after the coating solution is transferred onto at least one surface of the substrate.

In one embodiment of the present invention, step S50 of applying ultrasonic waves to the recovered coating solution may be further included. As described above, the recovered coating solution may be immediately transferred to the accommodation chamber 110 according to the embodiment of the coating device 1, or may be transferred to the coating solution tank 200 and then may be transferred back to the accommodation chamber 110. Meanwhile, when the coating solution is exposed to air atmosphere for a long time, the solvent may evaporate, and accordingly, the solutes in the coating solution may agglomerate with each other or the viscosity of the coating solution may be changed. Here, by applying ultrasonic waves to the coating solution recovered as described above, the solutes may be de-aggregated by generation and disappearance of microbubbles, and the viscosity of the coating solution may also be changed.

In one embodiment of the present invention, the viscosity of the coating solution may be present in the range of about 10 cps to 50 cps at 25 °C. Here, the viscosity of the coating solution may be measured by using, for example, a Brookfield viscometer (DV2T viscometer, 1,000 rpm, spindle 63) at 25 °C. Here, the viscosity of the coating solution may mean the viscosity of the coating solution accommodated in the accommodation chamber 110. The accommodation chamber 110 may include the recovered coating solution, but the viscosity of the coating solution within the accommodation chamber 110 may be kept constant by the ultrasonic generator 120. Meanwhile, in one embodiment of the present invention, as the solvent evaporates, the viscosity of the coating solution remaining after the coating solution is transferred onto at least one surface of the substrate may be increased, but, as described above, as ultrasonic waves are applied to the coating solution, the viscosity of the coating solution may be lowered again.

In one embodiment of the present invention, the binder polymer of the recovered coating solution has a third particle diameter larger than the first particle diameter, and the inorganic particles of the recovered coating solution have a fourth particle diameter larger than the second particle diameter. The third particle diameter and the fourth particle diameter may be reduced due to the ultrasonic waves in step S50.

In one embodiment of the present invention, in the recovered coating solution, the binder polymer, the inorganic particles, or two or more of these may be agglomerated with each other due to evaporation of the solvent and then formed into agglomerates. The agglomerates may be disintegrated by ultrasonic waves in step S50.

In one embodiment of the present invention, due to evaporation of the solvent, the recovered coating solution may have secondary particle-type binder polymers as the primary particle-type binder polymers agglomerate with each other, or may have binder polymers having the third particle diameter as the secondary particle-type binder polymers agglomerate with each other and their diameters are increased. Here, when ultrasonic waves are applied to the recovered coating solution, the agglomerated binder polymers may be de-aggregated and may become the primary particle-type binder polymers again. Thus, the third particle diameter may be reduced and the agglomerates of the binder polymers may be disintegrated.

In one embodiment of the present invention, due to evaporation of the solvent, the recovered coating solution may have the secondary particle-type inorganic particles having the fourth particle diameter as the primary particle-type inorganic particles having the second particle diameter agglomerate with each other, or may have the inorganic particles having the fourth particle diameter as the secondary particle-type inorganic particles having the second particle diameter agglomerate with each other and their diameters are increased. Here, when ultrasonic waves are applied to the recovered coating solution, the agglomerated inorganic particles may be de-aggregated and may become the primary particle-type inorganic particles again. Thus, the fourth particle diameter may be reduced and the agglomerates of the inorganic particles may be disintegrated.

In one embodiment of the present invention, in the recovered coating solution, the inorganic particles and the binder polymer may be agglomerated individually or in combination to form agglomerates, and then as ultrasonic waves are applied to the recovered agglomerates, the agglomerates may be disintegrated.

The coating solution in which the agglomerates are disintegrated through ultrasonic application in step S50 may be reused. Such a coating solution may be mixed with the coating solution for performing step S10 or instead, may be supplied to the accommodation chamber 110, so as to be continuously used for application onto the substrate.

According to the separator manufacturing method of the present invention, the re-aggregated inorganic particles or binder polymers may be de-aggregated by using the ultrasonic generator, and then may be used after being brought to a state similar to that of a coating solution before recycling. Even when the inorganic particles are re-aggregated due to exposure to air, the inorganic particles may be applied onto the substrate after being de-aggregated by the ultrasonic generator. Thus, the separator may be manufactured by using inorganic particles with a small particle size, that is, fine particles. When the coating solution containing the re-aggregated inorganic particles or binder polymers as they are is recycled, there is a concern about quality deterioration. According to the present invention, the re-aggregated inorganic particles may be restored to inorganic particles as fine particles through disintegration and then may be used for manufacturing the separator. The separator manufactured by this method may have high safety by including a high-quality inorganic coating layer. Then, since the coating solution can be recycled, the manufacturing cost for the separator may be lowered.

FIG. 7 schematically illustrates a flowchart of a method of manufacturing the separator according to another embodiment of the present invention.

Referring to FIG. 7, the separator manufacturing method according to another embodiment of the present invention includes: step P1 of supplying a coating solution containing a binder polymer, inorganic particles and a solvent to an accommodation chamber included in a coater head by using a coating device including the coater head; step P2 of transferring the coating solution onto at least one surface of a substrate being transported in one direction, by using a coating bar provided in a part of the coater head; step P3 of recovering the coating solution remaining after the coating solution is transferred onto at least one surface of the substrate, by using a recovery unit provided on the outer surface of the coater head; and step P4 of applying ultrasonic waves to the coating solution recovered into the accommodation chamber via the recovery unit.

That is, the separator manufacturing method according to another embodiment of the present invention is different from the above-described separator manufacturing method according to one embodiment in that ultrasonic irradiation is not applied to the initial coating solution but ultrasonic waves are applied to the coating solution recovered through the recovery unit.

The contents related to the binder polymer, the inorganic particles, and the solvent are replaced with those described above.

In one embodiment of the present invention, after step P4, a step of transferring the coating solution to which ultrasonic waves have been applied, onto at least one surface of the porous polymer substrate may be further included.

### <Separator for lithium secondary battery>

The present invention provides a separator for a lithium secondary battery.

The separator for the lithium secondary battery according to the present invention includes: a porous polymer substrate; and an inorganic coating layer that is formed on at least one surface of the porous polymer substrate, and includes inorganic particles and a binder polymer. The surface roughness (Ra) of the inorganic coating layer is about 0.12 µm or less, the SPAN value of the inorganic particles is about 1.35 or less, and the SPAN value is calculated by Equation 1: 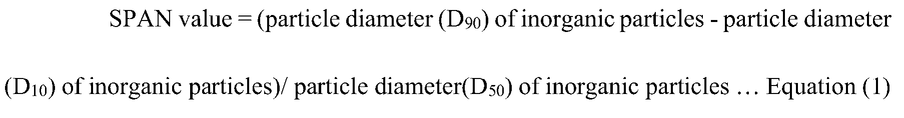SPAN value = (particle diameter (D90) of inorganic particles - particle diameter (D10) of inorganic particles)/ particle diameter(D50) of inorganic particles Equation (1)

In one embodiment of the present invention, the inorganic coating layer is formed by mixing a plurality of inorganic particles with a binder polymer. When the porous polymer substrate is covered with the inorganic coating layer containing inorganic particles in this way, the heat resistance and mechanical properties of the separator may be further improved.

In one embodiment of the present invention, the thickness of the inorganic coating layer may be in a range of about 0.5 µm to about 5 µm, about 0.6 µm to about 2 µm, or about 0.8 µm to about 1.8 µm on the basis of formation on any one side surface of the porous polymer substrate.

In one embodiment of the present invention, the SPAN value may be about 1.35 or less, about 1.33 or less, or about 1.3 or less. When the SPAN value satisfies the above numerical range, the quality of the separator may be more excellent, due to, for example, a low surface roughness of the separator.

In one embodiment of the present invention, the SPAN value may be 0 or more.

In one embodiment of the present invention, the surface roughness (Ra) of the inorganic coating layer may be about 0.12 µm or less or about 0.115 µm or less. When the surface roughness of the inorganic coating layer satisfies the above described range, the adhesion of electrode-separator may be more excellent.

Meanwhile, in one embodiment of the present invention, a method of measuring the surface roughness (Sa) is not limited. For example, the surface roughness may be measured by a roughness meter (for example, Surface profiler) or a confocal laser scanning microscope (CLSM). For example, measurement may be performed by enlarging a predetermined scanning area at a magnification of 50 times with a CLSM, and then, after 10 measurements per sample, an average value may be used. As for the CLSM, for example, OLS 5100, and OLS4100 of Olympus may be used, but the present invention is not limited thereto. The magnification of the confocal laser microscope may be adjusted to 10 times, 50 times, 100 times, 1,000 times, 2,000 times, 5,000 times, and the like.

In one embodiment of the present invention, the inorganic coating layer may be formed by a coating solution in which inorganic particles and a binder polymer are disintegrated from each other by ultrasonic waves, and the coating solution may be manufactured by the above-described method.

In one embodiment of the present invention, the particle diameter (D₅₀) of the inorganic particles may be about 1.0 µm to about 1.3 µm or about 1.05 µm to about 1.2 µm. When the particle diameter (D₅₀) of the inorganic particles satisfies the above-described range, the thickness of the coating layer may be more easily adjusted.

Hereinafter, the present invention will be described in more detail through Examples, but the following examples are intended to illustrate the present invention, and the scope of the present invention is not limited to these.

### <Comparative Example 1>

Aluminum oxide (Al₂O₃, D₅₀: 600 nm, Sumitomo Co., Ltd.) as inorganic particles and polymethylmethacrylate (D₅₀: 200 nm, Toyo-ink Co., Ltd.) as a particle-type acrylic binder were added to water at room temperature to prepare a coating solution. The viscosity of the coating solution was 20 cps at 25 °C. Also, the particle diameter D₁₀ of the inorganic particles in the coating solution was 0.6 µm, the D₅₀ was 1.3 µm, the D₉₀ was 2.4 µm, and the SPAN value was 1.38.

Next, the coating solution was applied onto one surface of a porous polymer substrate (porosity 40%, thickness 9 µm) made of polyethylene, and then dried at a temperature of 65 °C for 30 sec to prepare a separator on which an inorganic coating layer was formed.

### <Comparative Example 2>

Aluminum oxide (Al₂O₃, D₅₀: 600 nm, Sumitomo Co., Ltd.) as inorganic particles and polymethylmethacrylate (D₅₀: 200 nm, Toyo-ink Co., Ltd.) as a particle-type acrylic binder were added to water at room temperature to prepare a coating solution. This was left in air atmosphere for 30 min to prepare the coating solution. Here, it was confirmed that the viscosity of the coating solution was 60 cps at 25 °C, the particle diameter D₁₀ was 0.7 µm, the D₅₀ was 2.5 µm, the D₉₀ was 4.2 µm, and the SPAN value was 1.40.

Next, the coating solution was applied onto one surface of a porous polymer substrate (porosity 40%, thickness 9 µm) made of polyethylene, and then dried at a temperature of 65 °C for 30 sec to prepare a separator on which an inorganic coating layer was formed.

### <Example 1>

Aluminum oxide (Al₂O₃, D₅₀: 600 nm, Sumitomo Co., Ltd.) as inorganic particles and polymethylmethacrylate (D₅₀: 200 nm, Toyo-ink Co., Ltd.) as a particle-type acrylic binder were added to water at room temperature to prepare a coating solution. This was left in air atmosphere for 30 min, then ultrasonic waves having a frequency of 20 kHz were applied to the coating solution by an ultrasonic generator, so as to prepare the coating solution to which ultrasonic waves have been applied. Here, it was confirmed that the viscosity of the coating solution was 15 cps at 25 °C, the particle diameter D₁₀ was 0.5 µm, the D₅₀ was 1.1 µm, the D₉₀ was 1.9 µm, and the SPAN value was 1.27.

Next, the coating solution was applied onto one surface of a porous polymer substrate (porosity 40%, thickness 9 µm) made of polyethylene, and then dried at a temperature of 65 °C for 30 sec to prepare a separator on which an inorganic coating layer was formed.

### <Experimental example 1>

### Viscosity measurement

The viscosity of the coating solution in Example and Comparative Examples was measured at 25 °C by using a Brookfield viscometer (DV2T viscometer, 1,000 rpm, spindle 63).

### Measurement of particle diameters D₁₀, D₅₀, and D₉₀ and derivation of SPAN value

The inorganic particles and the binder polymer of Example and Comparative Examples were dispersed in a dispersion medium, and were introduced into a laser diffraction particle size measuring device (Mastersizer 3000) to perform measurement. From the particle diameter values derived in this manner, SPAN values were derived by using Equation 1 below and were summarized in Table 1 below. 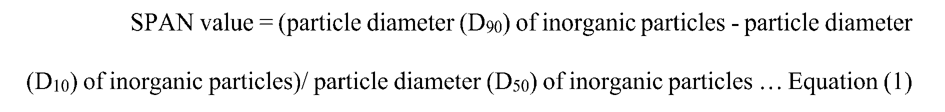 SPAN value = (particle diameter (D90) of inorganic particles - particle diameter (D10) of inorganic particles)/ particle diameter (D50) of inorganic particles Equation (1)

**[Table 1]**

| | Viscosity | D₁₀ | D₅₀ | D₉₀ | SPAN value |
|---|---|---|---|---|---|
| Comparative Example 1 | 20 cps | 0.6 µm | 1.3 µm | 2.4 µm | 1.38 |
| Comparative Example 2 | 60 cps | 0.7 µm | 2.5 µm | 4.2 µm | 1.40 |
| Example 1 | 15 cps | 0.5 µm | 1.1 µm | 1.9 µm | 1.27 |

Through a comparison between Comparative Examples and Example, it was confirmed that when left in air atmosphere, the inorganic particles and the binder particles are subjected to accelerated agglomeration, and a coating solution has an increased viscosity and an increased SPAN value, but the application of ultrasonic waves breaks up the agglomeration of the inorganic particles and the binder polymer. Then, the viscosity is reduced, and the distribution of the inorganic particles, that is, dispersity, becomes narrow. That is, it was confirmed that through application of ultrasonic waves, the viscosity of the coating solution is restored to a state close to that before exposure to air, or rather, the viscosity becomes lower than that of the initial coating solution and also the particle diameter of the inorganic particles is further reduced. It is determined that this is a result obtained by applying ultrasonic waves and effectively breaking up agglomeration although inorganic particles and binder polymer have been subjected to the agglomeration due to physical/chemical properties even before exposure to air.

### <Experimental example 2>

Surface observation and surface roughness (Ra) measurement

The surfaces of separators of Example and Comparative Examples are illustrated in FIGS. 8a to 8c by using a confocal scanning microscope (OLS 5100 of Olympus). The surface of the separator was measured 10 times at a magnification of 50, and the average roughness was measured and is noted in Table 2 below. Specifically, FIG. 8a is a photograph of the separator surface of Comparative Example 1 observed with a confocal scanning microscope, FIG. 8b is a photograph of the separator surface of Comparative Example 2 observed with the confocal scanning microscope, and FIG. 8c is a photograph of the separator surface of Example 1 observed with the confocal scanning microscope.

**[Table 2]**

| | Surface Roughness (Ra) |
|---|---|
| Comparative Example 1 | 0.1065 µm |
| Comparative Example 2 | 0.1898 µm |
| Example 1 | 0.1108 µm |

As a result of comparison between Comparative Examples and Example, it was confirmed that when left in the air atmosphere, the inorganic particles and the binder particles were subjected to accelerated agglomeration, and then the surface roughness of Comparative Example 2 was increased compared to Comparative Example 1. Afterwards, as a result of application of ultrasonic waves to the coating solution as in Example 1, it was confirmed that the agglomeration of the inorganic particles and the binder polymer was broken up, and the separator manufactured by the coating solution of Example 1 exhibited a surface roughness value similar to the initial state.

Through the above experimental results according to Example and Comparative Examples, it was confirmed that when ultrasonic waves are applied to the coating solution including the inorganic particles and the binder polymer as in one aspect of the present invention, the particle size of the inorganic particles is reduced and the SPAN value (dispersity) is lowered.

Accordingly, it was confirmed that it is possible to manufacture a separator having an excellent surface roughness characteristic when the coating solution to which ultrasonic waves have been applied is used to form the inorganic coating layer.

Also, according to another aspect of the present invention, when the coating solution including the inorganic particles and the binder polymer was left in air atmosphere, or when the remaining coating solution that is not transferred to the porous polymer substrate is reused, it was confirmed that by applying ultrasonic waves, the properties of the corresponding coating solution can be restored to a level equal to or similar to the initial state.

Although the above descriptions have been made with reference to embodiments of the present invention, it will be understood by those of ordinary skill in the art in the relevant technical field or those having ordinary knowledge in the relevant technical field that various modifications and changes can be made to various embodiments of the present invention within a scope that does not depart from the technical scope of various embodiments of the present invention described in the claims to be described below. Therefore, the technical scope of various embodiments of the present invention should not be limited to the contents described in the detailed description of the specification, but should be determined by the claims.

## Claims

1. A coating device comprising:
a coater head;
an accommodation chamber that is located inside the coater head and accommodates a coating solution;
an ultrasonic generator that is located inside the coater head and applies ultrasonic waves to the coating solution accommodated in the accommodation chamber; and
a coating bar that transfers the coating solution from the accommodation chamber onto at least one surface of a substrate being transported in one direction.

2. The coating device according to claim 1, wherein the ultrasonic generator is located inside the accommodation chamber.

3. The coating device according to claim 1, wherein the ultrasonic generator is located on an inner wall of the accommodation chamber.

4. The coating device according to claim 1, further comprising:
a coating solution tank that is located outside the coater head, and supplies the coating solution to the accommodation chamber through a transfer pipe.

5. The coating device according to claim 1, further comprising:
a recovery unit that is located on an outer surface of the coater head, and accommodates the coating solution that remains after coating at least one surface of the substrate and is transferred along the outer surface of the coater head.

6. The coating device according to claim 5, further comprising: a first recovery pipe that is located inside the coater head, and connects the recovery unit to the accommodation chamber.

7. The coating device according to claim 1, further comprising: a coating solution tank that is located outside the coater head, and supplies the coating solution to the accommodation chamber through a transfer pipe;
a recovery unit that is located on an outer surface of the coater head, and accommodates the coating solution that remains after coating at least one surface of the substrate and is transferred along the outer surface of the coater head; and
a second recovery pipe that connects the recovery unit to the coating solution tank.

8. The coating device according to claim 1, wherein the ultrasonic generator includes a sensor unit therein so as to control whether to generate ultrasonic waves in response to an external signal.

9. A method of manufacturing a separator by using a coating device including a coater head, the method comprising:
supplying a coating solution containing a binder polymer, inorganic particles and a solvent to an accommodation chamber included in the coater head (S10);
applying ultrasonic waves to the coating solution accommodated in the accommodation chamber by using an ultrasonic generator located inside the coater head (S20); and
transferring the coating solution to which the ultrasonic waves have been applied, onto at least one surface of a substrate being transported in one direction, by using a coating bar provided in the coater head (S30).

10. The method according to claim 9, wherein the ultrasonic waves have a frequency of 20 kHz to 100 kHz.

11. The method according to claim 9, further comprising:
after (S30), recovering the coating solution remaining after the coating solution is transferred onto at least one surface of the substrate, by using a recovery unit provided on an outer surface of the coater head (S40).

12. The method according to claim 11, further comprising:
after (S40), applying ultrasonic waves to the coating solution recovered into the accommodation chamber via the recovery unit (S50).

13. The method according to claim 9, wherein in S10, the coating solution has a viscosity present within a range of 10 cps to 50 cps at 25 °C.

14. A method of manufacturing a separator by using a coating device including a coater head, the method comprising:
supplying a coating solution containing a binder polymer, inorganic particles and a solvent to an accommodation chamber included in the coater head (P1);
transferring the coating solution onto at least one surface of a substrate being transported in one direction, by using a coating bar provided in a part of the coater head (P2);
recovering the coating solution remaining after the coating solution is transferred onto at least one surface of the substrate, by using a recovery unit provided on an outer surface of the coater head (P3); and
applying ultrasonic waves to the coating solution recovered into the accommodation chamber via the recovery unit (P4).

15. A separator for a secondary battery, the separator comprising:
a porous polymer substrate; and
an inorganic coating layer that is formed on at least one surface of the porous polymer substrate, and contains inorganic particles and a binder polymer,
wherein a surface roughness (Ra) of the inorganic coating layer is 0.12 µm or less,
a SPAN value of the inorganic particles is 1.35 or less, and
the SPAN value is calculated by Equation 1: 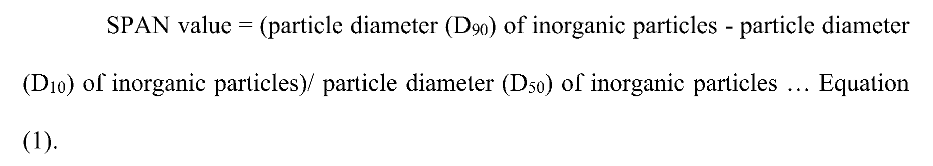 SPAN value = (particle diameter (D90) of inorganic particles - particle diameter (D10) of inorganic particles)/ particle diameter (D50) of inorganic particles Equation (1)

16. The separator for the lithium secondary battery according to claim 15, wherein the inorganic coating layer is formed by a coating solution in which the inorganic particles and the binder polymer are disintegrated from each other by ultrasonic waves, and
the coating solution is prepared according to claim 9.

17. The separator for the lithium secondary battery according to claim 15, wherein a particle diameter (D₅₀) of the inorganic particles is 1.0 µm to 1.3 µm.
